# EUROPEAN PATENT SPECIFICATION

(11) **EP 2 391 973 B1**
(45) Date of publication and mention of the grant of the patent: **28.11.2018**
(21) Application number: 10709020.1
(22) Date of filing: 02.02.2010
(51) Int. Cl.: G06K 19/073

(54) **METHOD AND APPARATUS FOR DETECTING WIRELESS TRANSACTIONS**
VERFAHREN UND VORRICHTUNG ZUM DETEKTIEREN DRAHTLOSER TRANSAKTIONEN
PROCÉDÉ ET APPAREIL DE DÉTECTION DE TRANSACTIONS SANS FIL

(30) Priority: 02.02.2009 GB 0901681; 02.02.2009 GB 0901680
(43) Date of publication of application: 07.12.2011
(73) Proprietor: Royal Holloway And Bedford New College, Egham, Surrey TW20 0EX (GB)
(72) Inventor: HANCKE, Gerhard, Surrey TW20 0BF (GB); MAYES, Keith, Edward, Berkshire RG17 0LA (GB)
(74) Representative: Jaeger, Michael David
(86) International application number: PCT/GB2010/000167
(87) International publication number: WO 2010/086627

(56) References cited:
- EP-A1- 1 647 918
- EP-A2- 1 901 198
- WO-A1-2007/122425
- WO-A1-2008/138051
- WO-A2-2005/052846
- WO-A2-2006/083468
- US-A- 6 100 603
- US-A1- 2006 033 608
- US-A1- 2006 131 375
- US-A1- 2006 226 969
- US-A1- 2007 046 439

## Description

### TECHNICAL FIELD

This invention relates to a method and apparatus for detecting wireless transactions and, in particular, a method and apparatus for detecting attempted fraudulent wireless transactions.

### BACKGROUND TO THE INVENTION

Radio Frequency Identity (RFID) tags are becoming more and more pervasive. Generally, an RFID tag includes an antenna attached to a circuit so that an identifier is transmitted as the antenna enters a radio field emitted by a reader. RFID tags are found with varying degrees of functionality where the amount and type of information they are able to transmit varies.

Certain tags include sufficient circuitry to participate in transactions which include, for example, authentication of the tag and may be used for access control and for transactions involving payment. Often such tags are card-shaped and, according to standard ISO 14443, are referred to as "proximity cards". The term "proximity token" is used herein, but the operation of such proximity tokens are not limited to compliance with this standard, and it is to be realised that it is not necessary that the proximity tokens be planar-shaped. In fact, any size which does not affect their function may be used. Such proximity tokens may also be referred to as "contactless smartcards" or "vicinity cards" in the art.

Proximity tokens interact with corresponding proximity token readers. The proximity token reader generates an RF field (also referred to as "electromagnetic field") which it can control and modulate in such a way that it can transmit a message to the proximity token. A proximity token may transmit signals and messages to the proximity token reader by generating its own RF field which is received by the proximity token reader or by drawing power from the proximity token reader's RF field and modulating the proximity token reader's field (these modulations then being detected by the proximity token reader). The former requires the proximity token to have its own power source.

As stated, the use of proximity tokens in a number of contactless transactions is known. For example Mifare® cards and corresponding readers allow transactions for mass transit systems in Malaysia, Australia, South Korea, the UK and the Netherlands. However, it has recently been announced that the algorithm used in the Mifare Classic cards has been reverse engineered and published by a group of researchers working at Radboud Universiteit Nijmegen (see press release of 12 March 2008).

It is to be expected, as technology improves, that the security aspects of such proximity tokens will be compromised. There are at least two distinct security concerns which need to be addressed in the future. Firstly, it is possible for someone to mount an attack on an existing reader to elicit information which can be used in the future to compromise the system (for example by extracting encryption key information). Secondly, a fraudulent proximity token may be produced which is able to participate in fraudulent transactions with existing readers.

It is therefore desirable to be able to detect and prevent attempts to elicit unauthorised information and fraudulent proximity tokens.

WO-A2-2005052846 describes a jammer for jamming the readout of contactless data carriers by a reader emitting electromagnetic scanning signals.

WO 2006/083468 A2 discloses a method wherein a RF fingerprint of a received RFID message is compared with a predetermined RF fingerprint and if said received RF fingerprint is different from the predetermined fingerprint the RFID device sending the message is considered to be not legitimate.

### SUMMARY OF THE INVENTION

Embodiments of the invention extend to an apparatus and corresponding method for detecting an attempt to participate in an unauthorised transaction, said transaction involving modulating wireless radio frequency, RF, signals emitted by a reader when a proximity token is brought into proximity with an electromagnetic field generated by the reader, said modulated RF signals having characteristics of frequency, power and timing, the apparatus comprising means for detecting one or more anomalous characteristics of the modulated RF signals and means adapted to, in response to detection of one or more anomalous characteristics, update a metric for use in deciding whether to issue a notification that said transaction may be unauthorised, wherein said means for detecting one or more anomalous characteristics of the modulated RF signals is adapted to monitor an order in which a plurality of messages are sent by said proximity token, said plurality of messages comprising a message session, and wherein said means for updating a metric is arranged to update said metric if said order is different from a predetermined order.

By detecting anomalous characteristics while monitoring one or more transactions involving wireless RF signals between a reader and a proximity token and, in response to detecting said anomalous characteristics, updating a metric for use in deciding whether to issue a notification that said transaction may be unauthorised, embodiments of the invention may be implemented in legacy systems. Therefore it is unnecessary to provide expensive and complex upgrades to existing systems to improve their ability to deal with fraudulent transactions. Furthermore, embodiments of the invention are able to not only detect attempts to elicit unauthorised information from readers, but are also able to detect cloned proximity tokens presented in an attempt to complete fraudulent transaction.

It should further be noted that although the transaction is described as occurring between a reader and a proximity card, the embodiments of the invention are equally applicable to the situation where an RF receiver is used to eavesdrop on a transaction or where an unauthorised reader is used to glean information passed between an authorised reader and a proximity token.

In certain embodiments the reader forms part of the legacy system and the apparatus interacts with the legacy system. In alternative embodiments, the apparatus is independent of the legacy system and therefore incorporates its own reader.

Said means for detecting one or more anomalous characteristics of said wireless transaction is adapted to monitor a plurality of messages sent by said proximity token or more than one proximity token, said plurality of messages comprising a message session.

Monitoring a session comprising a plurality of messages between the proximity tokens and the reader may be particularly effective at detecting a fraudulent transaction. This is because legacy readers are generally as simplistic as possible to reduce their cost and do therefore not include the ability to monitor a session of messages. Furthermore, certain fraudulent transactions can only be detected by monitoring a plurality of communications between the reader and the proximity token and comparing various aspects thereof.

Said session may comprise a plurality of messages generated or received by said proximity token.

Furthermore, said session may comprise messages generated with respect to a first proximity token and messages generated with respect to a second proximity token. Alternatively, the session may span messages generated by more than two proximity tokens.

Said means for detection one or more anomalous characteristics of said wireless transaction may be adapted to establish an identity of said proximity token, monitor a session of messages exchanged with said proximity token and, after an expected end of said session, re-establish an identity of said proximity token, wherein said anomalous characteristic comprises said identity of said proximity token failing to change after said end of said session.

Said means for detecting one or more anomalous characteristics of said wireless transaction may be adapted to monitor each message received from said proximity token and said means adapted to update said metric may be adapted to update said metric if at least one of said messages received from said proximity token does not comply with one or more predetermined criteria or fall within a range of predetermined criteria.

Said means for detecting one or more anomalous characteristics of said wireless transaction may be adapted to monitor a content of a plurality of messages and said means for updating said metric may be adapted to update said metric if said content does not match one or more predetermined values.

Said means for detecting one or more anomalous characteristics of said wireless transaction may be adapted to alter an amount in two or more sub-transactions and query said proximity token after each of said sub-transaction to ensure that the amount is altered. Preferably said means for detecting one or more anomalous characteristics of said wireless transaction is adapted to decrement a credit amount in each of said two or more sub-transactions.

Said means for detecting one or more anomalous characteristics of said wireless transaction may be adapted to establish a total of said credit amount after each of said sub-transactions.

Said means for detecting one or more anomalous characteristics of said wireless transaction may be adapted to detect anomalous frequency characteristics of said communication between said reader and said proximity token.

Said method may comprise the step of monitoring in-band characteristics. Additionally, or alternatively, said method may comprise the step of monitoring out-of-band characteristics. In-band characteristics relate to characteristics of emissions or modulations from the proximity token in the frequency band in which communications between the proximity token and a reader occur. Out-of-band characteristics relate to characteristics of emissions or modulations from the proximity token at frequencies other than those used for communications between the proximity token and the reader.

Either a cloned proximity token or an attempt to elicit information from a reader may involve the generation or modulation of radio waves at frequencies different from those that a normal transaction or a normal proximity token would generate or modulate. Therefore, by monitoring the frequency of the communication between the proximity token and the reader, any anomalous frequencies can be detected and, in response to detecting this, said metric updated.

Said means for detecting one or more anomalous characteristics of said wireless transaction may be adapted to detect anomalous power characteristics of said communication between said reader and said proximity token.

Both fraudulent proximity tokens and an attempt to elicit unauthorised information may involve abnormal power characteristics of the communication between the proximity token and the reader. In particular, a cloned proximity token attached to its own power source will be able to generate communications with the reader at a power greater than that of known proximity tokens which rely on the radio waves generated by the reader for their power. This test, when used to test for fraudulent proximity tokens, may be particularly effective where a proximity token is suspected as being fraudulent. In this case the power of the radio frequency signal emitted by the reader may be reduced to check whether the suspectproximity token is capable of transmitting at a power in excess of what is expected. Therefore, this may act as a check to determine whether the proximity token is fraudulent or not.

A further power test which may be employed involves reducing the power of the radio frequency signals emitted by the reader to the lowest acceptable power which a genuine proximity token could be expected to respond to. A failure of the proximity token to respond is then taken as an indication that the proximity token is fraudulent.

Said method may comprise the further step of reducing a power of radio frequency transmission from said reader and determining that said power characteristic is anomalous if said proximity token is able to compensate for said reduction in power or if said proximity token is unable to communicate with said reader at the reduced power. Fraudulent proximity tokens are often provided with their own power source and are therefore able to respond to weaker transmissions from the reader than authentic proximity tokens. Alternatively, fraudulent proximity tokens are less responsive than genuine proximity tokens. By testing the proximity token's ability to respond to weaker signals, possibly fraudulent proximity tokens may be identified.

Said means for detecting one or more anomalous characteristics of said wireless transaction may be adapted to detect a power of radio communications from said proximity token and said means for updating said metric may be adapted to update said metric if said detected power is greater than or less than a predefined level.

Said means for detecting one or more anomalous characteristics of said wireless transaction may be adapted to detect a timing of said communications.

Said means for detecting one or more anomalous characteristics of said wireless transaction may be adapted to detect a time period between one or more messages sent by said reader or said proximity token and one or more messages sent by said proximity token.

By detecting the timings of the various messages sent by the reader and the proximity token and comparing this to the timings that an authentic proximity token would display, fraudulent proximity tokens and attempts to elicit unauthorised information may be detected.

Said means for updating said metric may be adapted to update said metric if said detected timing is greater than or less than a predefined time period.

Said means for detecting one or more anomalous characteristics of said wireless transaction may be adapted to monitor voltages, bit timing, frame timing, errors, message lengths, or message formats of communications between said proximity token and said reader.

Detection of an abnormality in any one of these characteristics of the communications between the proximity token and the reader may be indicative of an attempt at a fraudulent transaction.

The apparatus may further comprise means for correlating distance or location information.

Preferably the means for correlating distance or location information is adapted to correlate one or more of: a distance between said proximity card and said reader, a geographical location of said reader, or a geographical location of said proximity card. Advantageously, if the apparatus includes more than one antenna, the distance information may include a distance between the two antennae. In this instance the first antenna is orientated to receive signals corresponding to an authorised reader and the second antenna is orientated at a distance from the first antenna. It is to be realised that it is not necessary in this arrangement that the distance between the two antennae is known; it is merely necessary that the measurements made by the second antenna are weighted (as it is more likely that any transactions detected by this second antenna are unauthorised). In a refinement to this arrangement, the distance between the first and the second antennae are known and the measurements made by the second antenna are weighted accordingly. This reflects the realisation that the further away from the authorised reader a detected transaction occurs, the more likely it is that the transaction is unauthorised. As opposed to using the distance between the two antennae, absolute geographic locations may be used.

There is described an apparatus for detecting an unauthorised proximity token, said apparatus comprising means adapted to monitor one or more characteristics of said proximity token and to detect one or more anomalous characteristics, and means for updating a metric for use in deciding whether to issue a notification that said proximity token may be unauthorised in response to a detected anomalous characteristic of radio frequency interactions with said proximity token.

Said means adapted to monitor characteristics of said proximity token may be adapted to monitor one or more of the following: a frequency or a power of an electromagnetic field generated by said proximity token.

There is described an apparatus for detecting a fraudulent proximity token involved in a wireless transaction with a reader which includes means for reducing a power of radio waves generated by said reader to reduce an effective distance between said reader and said proximity token for a successful transaction.

By reducing the power of the radio waves generated by the reader, a user is forced to reduce the distance between the reader and the proximity token to ensure that the transaction can be successfully completed. This can be used to ensure that the proximity token is placedin a predetermined position in which a visual inspection (either manually or through the use of CCTV) can be performed. Alternatively, this position could be located to perform a further test on the proximity token involving (for example) an additional antenna.

By reducing the power, proximity token holders will be forced to remove their proximity tokens from wallets and bags making a visual inspection of the proximity token easier.

Embodiments of the invention involve updating a metric when an anomaly is detected. This metric may be used in evaluating the likelihood that the proximity token is unauthorised. Once it has been decided that the proximity token is unauthorised various actions may be taken. For example an alert may be generated by the apparatus, the decision may be communicated to an entity external to the apparatus and/or block any messages being exchanged between the proximity token and the reader by emitting interfering signals (where the detector comprises its own antenna for doing so).

### BRIEF DESCRIPTION OF THE DRAWINGS

Embodiments of the invention will now be described with reference to the accompanying drawings in which like numerals have been used to refer to like components, and in which: -
Figure 1 is a flow diagram of a process according to an embodiment of the invention;
Figure 2 is a flow diagram of a portion of the process of Figure 1 illustrated in greater detail;
Figure 3 is a flow diagram of a portion of the process of Figure 1 illustrated in greater detail;
Figure 4 is a flow diagram of a portion of the process of Figure 1 illustrated in greater detail;
Figure 5 is a diagram illustrating a portion of the process of Figure 1 in greater detail;
Figure 6 is a diagram illustrating a proximity token and apparatus for reading the proximity token according to an embodiment of the invention;
Figure 7 is a diagram illustrating a portion of the apparatus for reading a proximity token of Figure 6 in greater detail;
Figure 8 is a diagram illustrating a proximity token and apparatus for reading the proximity token according to an alternate embodiment of the invention;
Figure 9 is a diagram illustrating a proximity token and apparatus for reading the proximity token according to an alternate embodiment of the invention; and
Figure 10 is a diagram illustrating a proximity token and apparatus for reading the proximity token according to an alternate embodiment of the invention.

### DESCRIPTION OF PREFERRED EMBODIMENTS

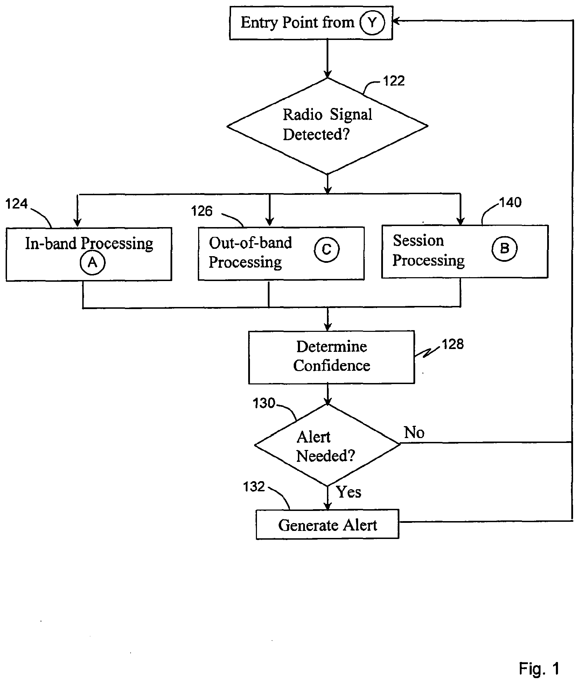

Figure 1 illustrates a process 118 according to an embodiment of the invention. The process 118 illustrates the general decision process involved in deciding whether a proximity token is fraudulent or whether an attempt has been made to elicit unauthorised information from a reader. The process begins at step 120 which represents the entry point into the process 118. At the next step, step 122 the modulation of the radio signal emitted by the proximity token reader is detected. This involves detecting whether communications between the proximity token and the proximity token reader have begun. If no such communications are detected the process will return to step 120. If the modulated radio signals are detected the process will continue to steps 124, 126 and/or 140.

Step 124 represents in-band processing (at frequencies of the communications between the proximity token and the proximity token reader) and step 126 represents out-of-band processing (at frequencies different from those used for communications between the proximity token and the proximity token reader). The in-band processing and the out-of-band processing may occur simultaneously (as illustrated in Figure 1). However, in alternative embodiments only the in-band processing 124 is performed, or only the out-of-band processing 126 is performed.

In a further embodiment, the in-band processing 124 is performed when a proximity token is brought into proximity with the proximity token reader and out-of-band processing 126 is performed continuously. The manner in which the communications are processed in steps 124 and 126 will be described in greater detail below.

Step 140 is the session processing where a session of messages (i.e. more than one message) are tested. The session processing may occur simultaneously with the in-band processing 124 and out-of-band processing 126 or may occur separately thereto. Furthermore, any one or more of the in-band processing 124, out-of-band processing 126 and session processing 140 may be selected.

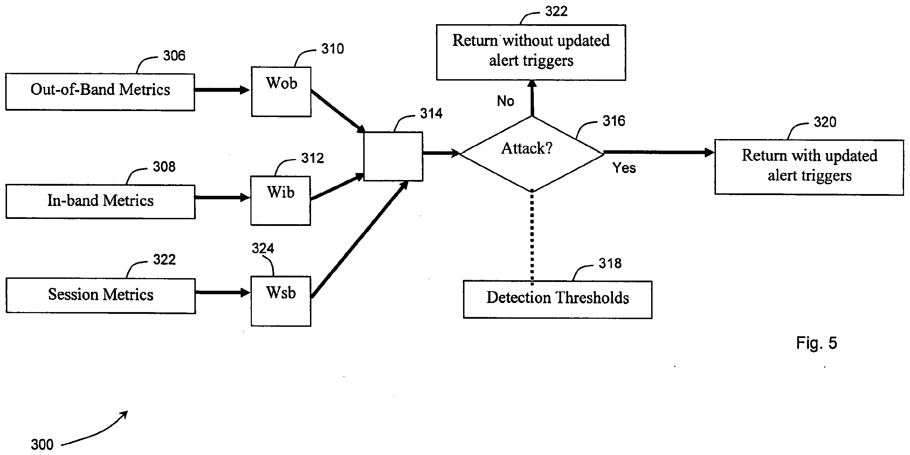

Once the in-band processing 124, out-of-band processing 126 and session processing 140 have completed the process continues onto step 128 where a confidence is determined and alert triggers updated accordingly. This is described in greater detail with reference to Figure 5 below.

The process will then continue onto step 130 where it is determined whether an alert is needed. This involves comparing the alert trigger(s) updated in step 128 to a predetermined confidence level and, according to this comparison, determining whether an alert should be generated. If it is determined in step 130 that the alert should be generated the process will continue to step 132 where the alert is generated. Alternatively, if it is determined in step 130 that the alert is not needed the process will return to the beginning of the process at step 120.

Once the alert has been generated at step 132, the process will return to step 120. For each return to the beginning of the process at step 120, a different set of tests to be performed may be specified.

It is to be realised that in alternative embodiments, instead of an alert being generated at step 132 others actions may be taken. For example, the system may reach the decision to monitor the proximity token involved so that the next time the particular proximity token is presented for authentication or is involved in transaction other tests are run. Alternatively, it could be determined that no or fewer tests for this proximity token are required in the future.

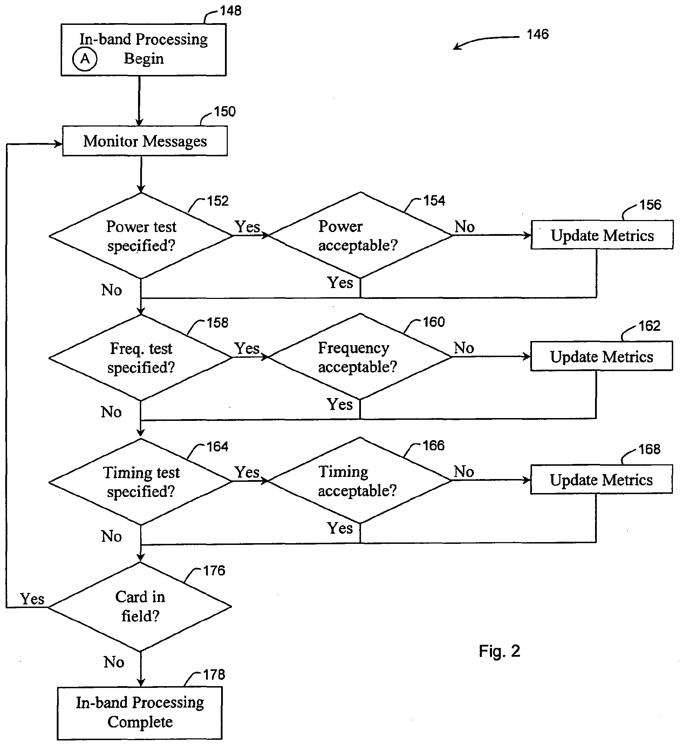

Figure 2 illustrates a process 148 for performing in-band processing. This process 148 represents step 124 of Figure 1 (as illustrated by the circled "A" in Figures 1 and 2). This process begins at steps 148 and moves onto step 150 where the messages exchanged between the proximity token reader and the proximity token are monitored.

It will be realised that both in-band processing and out-of-band processing may comprise various tests which may be run individually or in combination with any of the other tests. Which tests are to be run will be specified according to the protocol involved. When the process enters at step 124 which of the tests are to be performed will have been predetermined.

At the following step, step 152 it will be determined whether a power test has been specified. If the power test has been specified, the process will move on to step 154. In step 154 it is determined whether the power of the messages received from the proximity token is acceptable. This involves comparing the power of the received messages to a predetermined limit. If the monitored power exceeds or is less than the predetermined limit the process will proceed to step 156 where the metrics relating to the power are updated. In an alternative embodiment, the test of step 154 comprises reducing the power of the transmissions sent by the antenna. The power is then considered to be unacceptable (anomalous) if the proximity token is able to respond to transmissions with significantly decreased power as this is taken as an indication that the proximity token has its own power source. In a further embodiment, the test of 154 comprises reducing the power of the transmission to the minimum which an acceptable proximity token would be able to interact with. Failure of the proximity token to respond to these reduced-level signals is taken as an indication that the proximity token is fraudulent. It should also be realised that each of these power tests may be used in combination. This step of updating the metrics will be described in further detail below. Once the metrics have been updated in step 156 the process will proceed to step 158. Similarly, if it is found that the power is acceptable in step 154, or if the power test was not specified the process will proceed to step 158.

In step 158 it is determined whether a frequency test was originally specified. If this test was specified, the process proceeds to step 160 where it is determined whether the frequency of the received messages is acceptable. If it is determined that the frequency is not acceptable the process will update the relevant metrics in step 162 and proceed to step 164. If it is found that the frequency is acceptable in step 160, or if no frequency test was specified, the process will proceed directly to step 164.

In step 164 it is determined whether a timing test was specified. If the timing test was specified, the process proceeds to step 166 where the timing of the messages received at the proximity token reader are compared to a predetermined limit. There are a number of timings which may be tested: the time period between successive messages from the proximity token; the time period between a message from the proximity token reader and a response from the proximity token; the delay between a message sent by the proximity token reader and the response sent by the proximity token; or the time taken for the proximity token to send a particular message may all be monitored. If a particular monitored time exceeds or is less than a predetermined limit, it is determined that the timings are not acceptable and the process will proceed to step 168 where the relevant metrics are updated. The process will then proceed to step 176.

Step 176 represents a decision to determine whether the proximity token is still within the radio field of the proximity token reader. If it is the process will return to step 150 to monitor the messages after which the process will repeat from that step. If it is determined in step 176 that the proximity token is no longer within the radio field of the proximity token reader, the process will proceed to step 178 where it is determined that in-band processing is complete. The process will then return to step 128 of Figure 1.

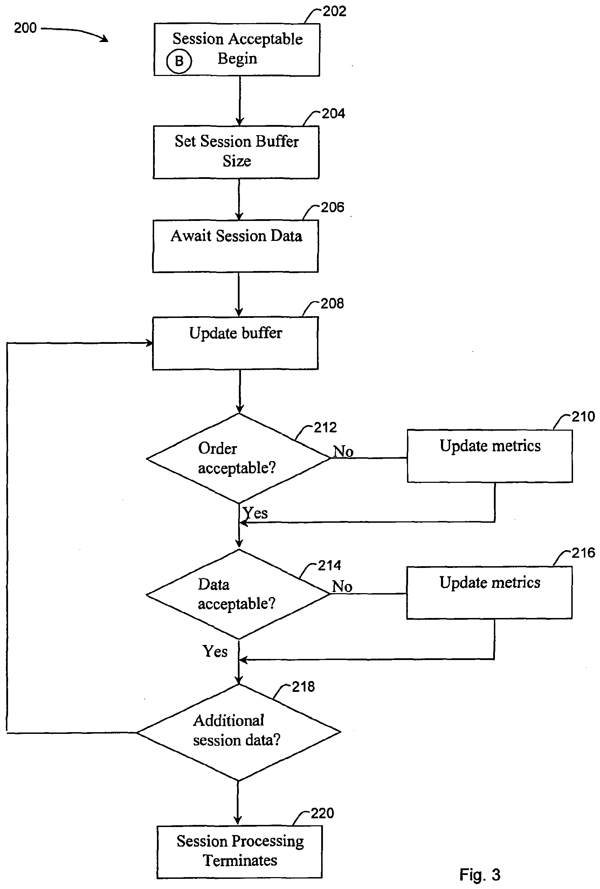

Figure 3 illustrates a process 200 corresponding to step 140 of Figure 1 where a test is performed to determine whether a session of messages is acceptable. Step 202 represents the beginning of the process. At the following step 204, the size of the session buffer will be set. The session buffer is preferably a first in first out buffer which will store the data relating to a number of messages. The number of messages for which data is stored will determine the size of the buffer (as will the content of the messages).

In the following step, step 206 the process awaits the message data. A session comprises more than one message. The exact number of messages for which the data is collected, and which therefore constitute a session, will depend on the type of test to be performed.

A session may involve interactions with more than one proximity token presented in sequence or simultaneously.

Once the session data in the form of message contents is received, the buffer is updated in step 208. In the following step, step 212, it is determined whether the order of the messages is acceptable. If it is determined that the messages have been received in an order which is different from the expected order the process will proceed to step 210 where the metrics are updated. However, if the order is determined to be acceptable the process will proceed to step 214. Further tests involving the power characteristics of the received signals are also possible at step 244 (e.g. those described above with reference to step 154 of Figure 2).

In step 214 it is determined whether the data content of the messages received is acceptable. If it is determined at step 214 that the data content is acceptable the process will continue on to step 218. However, if it is determined at step 214 that the content is not acceptable, the process will proceed to step 216 where the relevant metrics will be updated and thereafter the process will continue at step 218.

A determination is made at step 218 as to whether there is additional session data being received. If additional data is being received, the process will return to step 208 and the additional data will be process in the manner described above. If there is no additional data to be processed, the process will continue to step 220 where the session processing is determined to have terminated. The process will then return to step 140 of Figure 1.

Figure 3 illustrates a certain set of tests which may be performed for sessions of messages. However, in alternate embodiments, only the order of the messages of the session or in alternate examples useful for understanding the invention only the content of the messages of the session are tested. For example, if the proximity token is involved in a monetary transaction which involves the decrementing of a credit total, the normal transaction would involve a request by the proximity token reader to the proximity token for the proximity token to decrement its credit total. The proximity token will receive the request and, assuming that the proximity token is not fraudulent, decrement its total and send a confirmation to the proximity token reader.

However, if the proximity token is fraudulent, the proximity token will not decrement its total, but still send the confirmation to the proximity token reader that the total has been decremented. To detect this, the proximity token reader splits the transaction up into two parts involving two separate acts of decrementing the total of the proximity token, as well as reporting the total to the proximity token reader. The proximity token reader is then able to check to ensure that the total has been decremented as expected. If not, the metrics are updated as described below.

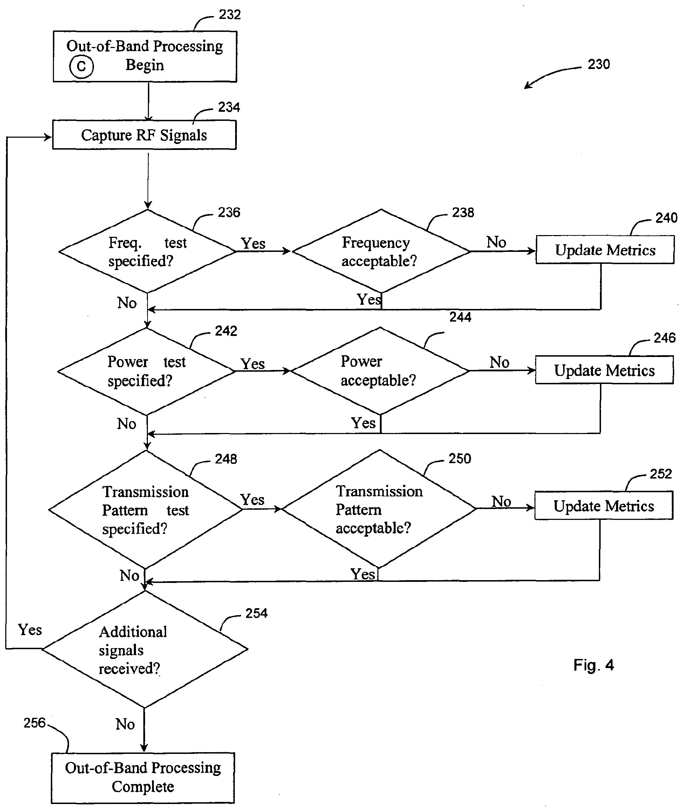

Figure 4 illustrates the out-of-band processing of step 126 of Figure 1. The process 230 of Figure 4 begins at step 232. At following step 234, the radio frequency signals modulated by the proximity token are detected. In this instance it is only the RF transmissions and modulation between the proximity token and the proximity token reader of frequencies other than those frequencies of the communications which are monitored. In order to monitor the signals an additional antenna may be positioned at a location where the proximity token is not interacting with the proximity token reader.

There are a number of tests which may be performed in out-of-band processing and which of these tests are to be performed will be specified before the process 230 begins.

At step 236 it is determined whether a frequency test has been specified. If this test was specified, the process proceeds to step 238 where it is determined whether the frequency is acceptable. This test will involve testing the frequencies of emissions caused by the proximity token (other than those frequencies used in the communications with the proximity token reader). For example, the proximity token is expected to emit at certain frequencies and not at others. One or more of these will be tested. If it is found that the frequencies of the proximity token emissions are not acceptable the process proceeds to step 240 where the relevant metrics are updated and then onto step 242. If the frequency is found to be acceptable in step 236, or if no frequency test was specified, the process will proceed directly to step 242.

At step 242 it is determined whether a power test has been specified. If this test was specified, the process proceeds to step 244 where it is determined whether the power is acceptable. This test will involve testing the power of the signals caused by the proximity token (at frequencies other than those frequencies used in the communications with the proximity token reader). If it is found that the power is unacceptable, the process proceeds to step 246 where the relevant metrics are updated and then onto step 248. If the power is found to be acceptable in step 244, or if no power test was specified, the process will proceed directly to step 248.

At step 248 it is determined whether a transmission pattern test has been specified. If this test was specified, the process proceeds to step 250 where it is determined whether the transmission pattern is acceptable. This test involves testing the transmission pattern caused by the proximity token (at frequencies other than those frequencies used in the communications with the proximity token reader). The measured pattern is correlated with stored patterns. If it is found that the pattern of the proximity token emissions are not acceptable the process proceeds to step 252 where the relevant metrics are updated and then onto step 254. If the pattern is found to be acceptable in step 250, or if no pattern test was specified, the process will proceed directly to step 254.

For each of the various steps illustrated in Figures 2, 3 and 5, if the test shows that the parameter being tested for is not acceptable the relevant metrics are updated. Various different forms of these metrics are provided for in different embodiments of the invention. In the simplest embodiment in this respect, the metric is a simple binary representation of whether the corresponding test was passed or failed. In more complex embodiments, the metric is a representation of a confidence level that the test has been passed expressed as a probability or percentage. The metrics from all the tests which are performed will be combined at step 128 of Figure 1 and contribute to a decision as to whether or not an alert should be issued or not.

Figure 5 is a diagram 300 illustrating a process for determining a confidence level in step 128 of Figure 1. At step 306 the metrics which were updated during the out-of-band processing (126, Figure 1 and Figure 4) are retrieved. At step 308 the metrics updated during the in-band processing (124, Figure 1 and Figure 2) are retrieved. Similarly, at step 322 the metrics updated during the session processing (140, Figure 1 and Figure 3) are retrieved. It is to be realised of course that it is not necessary to have metrics from both in-band and out-of-band processing. If tests in on one type of processing were performed, there would metrics only from the corresponding type.

At step 310 the out-of-band metrics are given a predetermined weighting and at step 312 the in-band metrics are given a predetermined weighting and at step 324 the session metrics are given a predetermined weighting (these steps too will vary depending on the number of tests performed). At step 314, the weighted metrics from in-band, out-of-band and session processing are combined. Various combiners may be used to perform this combining. In the embodiment illustrated, the combiner is a simple combiner which adds the weighted metrics together. In this embodiment, the attack detector generates a binary value for the alert triggers.

Step 316 represents an attack decision where it is determined whether an attack is occurring or whether a fraudulent proximity token has been presented. The decision at step 316 is based on the output from the combination of the metrics at step 314 and the detections thresholds at 318. The contribution of the data from the detection thresholds is depicted by a dotted line.

If it is determined at step 316 that an attack is occurring, the process will return to the step 130 of Figure 1 with the alert triggers updated. However, if it is determined at step 316 that no attack is occurring, the process will return to step 130 of Figure 1 without updating the alert triggers.

However, in an alternate embodiment, in which the comparator which carries out step 314 is not present, the attack detector comprises a number of comparators, each corresponding to each of the tests performed for the in-band, out-of-band and/or the session processing. In this instance, the confidence level generated is a non-binary number. A yet more sophisticated version would produce a confidence level based on a weighted attack signature pattern. In these alternate embodiments, the decision at step 316 may result in more than the binary decision depicted at step 316. Instead, the trigger alters may be updated based a more complex evaluation of the outputs of the comparators involved. However, in each embodiment, trigger alters will be generated which may be used as a basis for the step 130 of Figure 1.

As previously discussed, the trigger alerts generated in step 130 of Figure 1 may be used to decide whether or not to generate an alert at step 132. However, additional or alternate action to generating an alert occurs in other embodiments. For example, a certain configuration of alert triggers are, in an alternative embodiment, taken as an indication that the proximity token may be fraudulent, or involved in a fraudulent action. In this instance, the proximity token reader of this embodiment alters its interaction with the proximity token (in a manner different from the standard interaction). In one embodiment, control of the power of the proximity token reader is used to change user behaviour when presenting the proximity token. Here the proximity token reader reduces the power of the signals emitted by the proximity token reader which forces a user of the proximity token to reduce the distance between the proximity token and the proximity token reader (and further to remove the proximity token from any receptacle such as a pocket, wallet or bag). This allows a visual inspection of the proximity token to be performed which helps to verify that the proximity token is not fraudulent.

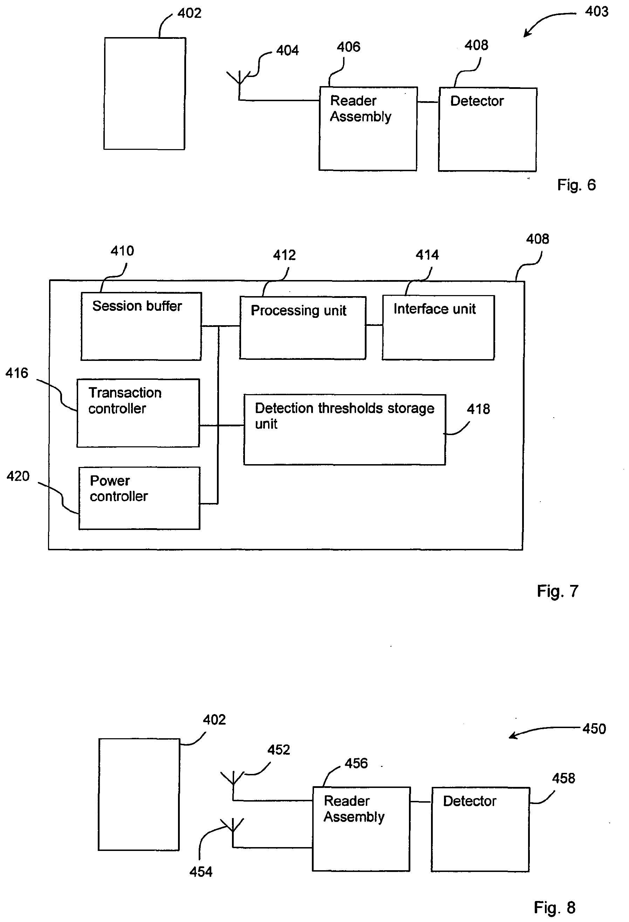

Figure 6 illustrates a proximity token 402 which is presented to an apparatus 403 for reading the proximity token. The apparatus 403 comprises an antennae 404 which is used for transmitting radio frequency signals and for receiving the radio frequency signals modulated by the proximity token 402. The antennae 404 is connected to a reader assembly 406 which is, in turn, connected to a detector 408. The reader assembly 406 operates in the same manner as readers of proximity tokens known in the art and will therefore not be further described herein. The detector 408 illustrated in greater detail in Figure 7, includes a session buffer 410, a transaction controller 416 and a power controller 420, all of which are connected to the reader assembly 406.

The session buffer 410 receives message data from the reader assembly and buffers the information from a plurality of messages. The transaction controller 416 controls the operation of the reader assembly 406 when necessary by having the reader assembly issue the required commands when, for example, it is determined that the proximity token may be fraudulent and it is desirable to issue additional messages to the proximity token and monitor the proximity token's response (involving messages and responses which an ordinary reader and assembly would not be involved in). The power controller 420 varies the power of the messages sent by the antennae 404 to the proximity token.

The power controller 420, session buffer 410 and the transaction controller 416 are all connected to a processing unit 412. The processing unit 412 is further connected to an interface unit 414. The interface 414 interfaces with an alarm (not shown) which is used to generate an alert.

The processing unit is further connected to a detection thresholds storage unit 418 which stores the detection thresholds used in the process illustrated in Figure 5.

The processing unit 412 controls the operation of the detector 408 to operate according to the methods and processes as described above.

In the embodiment of Figure 6, the proximity token modulates signals emitted by the reader emitted at 13.56 MHz and the protocol involved in the interchanges is ISO9798-2. It is to be realised however that many more embodiments where the reader emits at different frequencies and other protocols are used for communication with the proximity token.

Figure 8 illustrates the proximity token 402 and an apparatus 450 for transmitting RF signals and detecting modulation of these signals by the proximity token. The apparatus 450 differs from the apparatus 403 in that this apparatus includes two antennas 452 and 454 attached to a reader assembly 456 which is in turn attached to a detector 458.

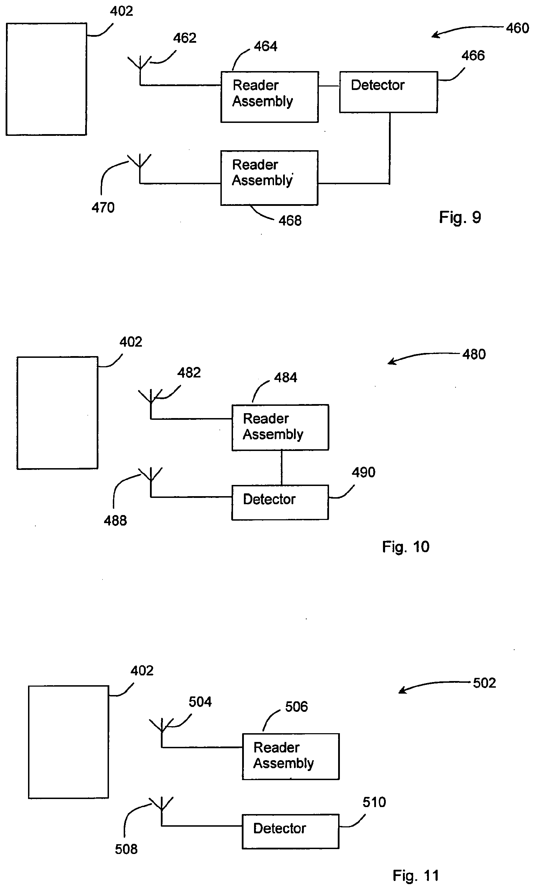

Figure 9 illustrates the proximity token 402 and an apparatus 460 for transmitting RF signals and detecting modulation of these signals by the proximity token. The apparatus 460 differs from the apparatus 403 in that this apparatus includes two antennas 462 and 470 attached to respective reader assemblies 464 and 468, both of which are attached to detector 466.

Figure 10 illustrates the proximity token 402 and an apparatus 480 for transmitting RF signals and detecting modulation of these signals by the proximity token. The apparatus 480 differs from the apparatus 403 in that this apparatus includes two antennas 482 and 488. Antenna 482 is connected to reader assembly 484, whereas antenna 488 is connected to detector 490. Detector 490 is connected to reader assembly 484.

In each of the embodiments illustrated in Figures 8, 9 and 10 the respective detectors 458, 466 and 486 perform the same function as the detector 408 of Figure 6. Similarly, the reader assemblies 456, 464, 468 and 486 perform the same function as the reader assembly 406 of the embodiment illustrated in Figure 6.

Figure 11 illustrates an alternative embodiment with an apparatus 502 for transmitting RF signals and detecting modulation of these signals by the proximity token 402. The apparatus 502 includes an antennae 504 connected to a reader assembly 506 and a second antennae 508 connected to a reader assembly 510. The apparatus 502 differs from the apparatus 480 of Figure 10 in that the reader assembly 506 is not connected to the detector.

In the embodiment of Figure 11, the reader assembly 506 is a legacy system and the detector 510 works in the proximity of the reader assembly, but independently thereof, as described above, to detect fraudulent proximity tokens or attempts at unauthorised transactions.

It is to be realised however that in the embodiment of Figure 11 the detector is not able to influence the reader assembly 506. The processes described above where such control is necessary (e.g. breaking down a transaction into two or more sub-transactions or controlling the power of the transmitter) will not be enabled in this embodiment.

Where an apparatus for reading RF signals emitted by a proximity token has more than one antenna, each antenna may be dedicated to receiving signals in specific frequency bands. Specifically, where the corresponding detector is used to monitor both in-band and out-of-band frequencies, one of the antennas may be dedicated to in-band signals and another of the antennas to out-of-band signals.

Furthermore, where more than a single antenna is provided any measurements may be made by each antennae. This is particularly useful when monitoring a session of messages as an increase in the number of antennae increases the time in which measurements may be made (assuming a constant speed for the proximity token passing the antennae) which increases the number of messages which may be monitored. Furthermore, where one antenna is spaced from another, each of the tests described herein may be performed with computational compensations made for the spatial dislocation. For example, an antenna spaced from the authorised reader's antenna may perform in-band processing and detect an unauthorised reader in this manner.

Where the detectors are connected to respective reader assemblies, any alert generated by the detector may be sent to the reader assembly or generate an external (to the reader) alert.

The embodiments illustrated in Figures 9, 10 and 11 include two antennae. Each of these apparatuses may incorporate the correlation of distance and location information with other measurements. In particular, the distance between a first antenna (462, 482, 504) and a second antenna (470, 488, 508) is taken into account when the various measurements made by these antennae are combined in the process analogous to that described with respect to Figure 5. In this embodiment, the first antenna (462, 482, 504) belongs to an authorised reader assembly (464, 484, 506) and any measurements made by the second antenna (470, 488, 508) will be weighted according to the realisation that any measurements made at this location are more likely to relate to an unauthorised transaction. In a further embodiment the weighting of the measurements of an antenna are related to the distance between that antenna and the antenna of the authorised reader assembly. In a further embodiment, the location of the antennae is stored in the reader assemblies (464, 468, 484, 506) or the detectors (466, 490, 510) and this information is used to weigh the measurements made at the corresponding antennae.

## Claims

1. Apparatus for detecting an attempt to participate in an unauthorised transaction, said transaction involving modulating wireless radio frequency, RF, signals emitted by a reader (406, 456, 464, 468, 484, 506) when a proximity token (402) is brought into proximity with an electromagnetic field generated by the reader (406, 456, 464, 468, 484, 506), said modulated RF signals having characteristics of frequency, power and timing, the apparatus comprising means for detecting one or more anomalous characteristics of the modulated RF signals and means adapted to, in response to detection of one or more anomalous characteristics, update a metric for use in deciding whether to issue a notification that said transaction may be unauthorised, **characterized in that** said means for detecting one or more anomalous characteristics of the modulated RF signals is adapted to monitor an order in which a plurality of messages are sent by said proximity token (402), said plurality of messages comprising a message session, and wherein said means for updating a metric is arranged to update said metric if said order is different from a predetermined order.

2. The apparatus according to claim 1, wherein the plurality of messages have a content, the means for updating a metric being arranged to update said metric if said content does not match one or more predetermined values.

3. A method for use in detecting an attempt to participate in an unauthorised transaction, said transaction involving modulating wireless radio frequency, RF, signals emitted by a reader (406, 456, 464, 468, 484, 506), said RF signals having characteristics of frequency, power and timing, said method comprising the steps of detecting one or more anomalous characteristics of the RF signals modulated when the proximity token (402) is brought into proximity with an electromagnetic field generated by the reader (406, 456, 464, 468, 484, 506) and, in response to said detection, updating a metric for use in deciding whether to issue a notification that said transaction may be unauthorised, **characterized in that** the detecting further comprises monitoring an order in which a plurality of messages are sent by said proximity token (402), said plurality of messages comprising a message session, and updating said metric if said order is different from a predetermined order.

4. The method according to claim 3, further comprising the step of monitoring a content of a plurality of messages sent by said proximity token (402) and updating said metric if said content does not match one or more predetermined values.

5. The method according to any one of claims 3 or 4, further comprising the step of detecting an electromagnetic field generated by said proximity token (402).

## Patentansprüche

1. Vorrichtung zum Erfassen eines Versuchs an einer nicht autorisierten Transaktion teilzunehmen, wobei die Transaktion das Modulieren von drahtlosen Funkfrequenz-, HF-Signalen betrifft, die von einem Lesegerät (406, 456, 464, 468, 484, 506) erzeugt werden, wenn eine Annäherungsmarke (402) in die Nähe zu einem elektromagnetischen Feld gebracht wird, das von dem Lesegerät (406, 456, 464, 468, 484, 506) erzeugt wird, wobei die modulierten HF-Signale bestimmten Eigenschaften der Frequenz, der Leistung und der Zeitsteuerung aufweisen, wobei die Vorrichtung Mittel zum Erfassen einer oder mehrerer anomaler Eigenschaften der modulierten HF-Signale und Mittel aufweist, die dazu angepasst sind, als eine Antwort auf das Erfassen einer oder mehrerer anomaler Eigenschaften eine Metrik zur Verwendung bei der Entscheidung, ob eine Meldung ausgegeben werden soll, dass die Transaktion nicht autorisiert ist, zu aktualisieren, **dadurch gekennzeichnet, dass** die Mittel zum Erfassen einer oder mehrerer anomaler Eigenschaften der modulierten HF-Signale angepasst sind, um eine Reihenfolge zu überwachen, in der eine Vielzahl an Nachrichten durch die Annäherungsmarke (402) gesendet wird, wobei die Vielzahl an Nachrichten eine Nachrichtensitzung umfasst, und wobei die Mittel zum Aktualisieren einer Metrik angeordnet ist, die Metrik zu aktualisieren, wenn sich die Reihenfolge von einer vorbestimmten Reihenfolge unterscheidet.

2. Vorrichtung nach Anspruch 1, wobei die Vielzahl an Nachrichten einen Inhalt aufweist und wobei die Mittel zum Aktualisieren einer Metrik eingerichtet sind, die Metrik zu aktualisieren, wenn der Inhalt nicht mit einem oder mehreren vorbestimmten Werten übereinstimmt.

3. Verfahren zur Verwendung beim Erfassen eines Versuchs an einer nicht autorisierten Transaktion teilzunehmen, wobei die Transaktion das Modulieren von drahtlosen Funkfrequenz-, HF-Signalen betrifft, die von einem Lesegerät (406, 456, 464, 468, 484, 506) erzeugt werden, wobei die modulierten HF-Signale bestimmten Eigenschaften der Frequenz, der Leistung und der Zeitsteuerung aufweisen, wobei das Verfahren die Schritte des Erfassens einer oder mehrerer anomaler Eigenschaften der HF-Signale umfasst, die moduliert werden, wenn die Annäherungsmarke (402) in die Nähe eines von dem Lesegerät (406, 456, 464, 468) erzeugten elektromagnetischen Feldes (484, 506) gebracht wird, und ein Aktualisieren einer Metrik zur Verwendung bei der Entscheidung, ob eine Meldung ausgegeben werden soll, dass die Transaktion unautorisiert sein kann, aufweist, **dadurch gekennzeichnet, dass** das Erfassen ferner ein Überwachen einer Reihenfolge umfasst, in der eine Vielzahl an Nachrichten durch die Annäherungsmarke (402) gesendet wird, wobei die Vielzahl an Nachrichten eine Nachrichtensitzung umfasst, und ein Aktualisieren der Metrik, wenn sich die Reihenfolge von einer vorbestimmten Reihenfolge unterscheidet.

4. Verfahren nach Anspruch 3, welches ferner einen Schritt des Überwachens eines Inhalts einer Vielzahl an Nachrichten, die von der Annäherungsmarke (402) gesendet werden, und ein Aktualisieren der Metrik aufweist, wenn der Inhalt nicht mit einem oder mehreren vorbestimmten Werten übereinstimmt.

5. Verfahren nach einem der Ansprüche 3 oder 4, welches ferner einen Schritt des Erfassens eines elektromagnetischen Felds aufweist, das von der Annäherungsmarke (402) erzeugt wird.

## Revendications

1. Appareil pour détecter une tentative de participation à une transaction non autorisée, ladite transaction impliquant la modulation de signaux RF radiofréquence sans fil, émis par un lecteur (406, 456, 464, 468, 484, 506) lorsqu'un jeton de proximité (402) est amené à proximité d'un champ électromagnétique généré par le lecteur (406, 456, 464, 468, 484, 506), lesdits signaux RF modulés ayant des caractéristiques de fréquence, puissance et séquencement, l'appareil comprenant des moyens pour détecter une ou plusieurs caractéristique(s) anormale(s) des signaux RF modulés et des moyens adaptés de façon à, en réponse à la détection d'une ou de plusieurs caractéristiques anormales, actualiser une métrique utilisée pour décider ou non d'émettre une notification à l'effet que ladite transaction peut être non autorisée, **caractérisé en ce que** lesdits moyens pour détecter une ou plusieurs caractéristique(s) anormale(s) des signaux RF modulés sont adaptés pour surveiller un ordre selon lequel une pluralité de messages sont envoyés par ledit jeton de proximité (402), ladite pluralité de messages comprenant une session de message, et dans lequel lesdits moyens pour actualiser une métrique sont disposés pour actualiser ladite métrique si ledit ordre est différent d'un ordre prédéterminé.

2. Appareil selon la revendication 1, dans lequel la pluralité de messages ont un contenu, les moyens pour actualiser une métrique étant disposés pour actualiser ladite métrique si ledit contenu ne correspond pas à une ou plusieurs valeur(s) prédéterminée(s).

3. Procédé utilisé pour détecter une tentative de participation à une transaction non autorisée, ladite transaction impliquant la modulation de signaux RF radiofréquence sans fil, émis par un lecteur (406, 456, 464, 468, 484, 506), lesdits signaux RF modulés ayant des caractéristiques de fréquence, puissance et séquencement, ladite méthode comprenant les étapes consistant à détecter une ou plusieurs caractéristique(s) anormale(s) des signaux RF modulés lorsque le jeton de proximité (402) est amené à proximité d'un champ électromagnétique généré par le lecteur (406, 456, 464, 468, 484, 506) et, en réponse à ladite détection, actualiser une métrique utilisée pour décider ou non d'émettre une notification à l'effet que la transaction peut être non autorisée, **caractérisé en ce que** la détection comprend en outre l'étape consistant à surveiller un ordre dans lequel une pluralité de messages sont envoyés par ledit jeton de proximité (402), ladite pluralité de messages comprenant une session de message, et à actualiser ladite métrique si ledit ordre est différent d'un ordre prédéterminé.

4. Procédé selon la revendication 3, comprenant en outre l'étape consistant à surveiller un contenu d'une pluralité de messages envoyés par ledit jeton de proximité (402) et à actualiser ladite métrique si ledit contenu ne correspond pas à une ou plusieurs valeur(s) prédéterminée(s).

5. Procédé selon l'une quelconque des revendications 3 ou 4, comprenant en outre l'étape consistant à détecter un champ électromagnétique généré par ledit jeton de proximité (402) .
